# EUROPEAN PATENT SPECIFICATION

(11) **EP 2 437 236 B1**
(45) Date of publication and mention of the grant of the patent: **14.12.2016**
(21) Application number: 10780093.0
(22) Date of filing: 30.04.2010
(51) Int. Cl.: G09B 23/32, G09B 23/28

(54) **DEVICE FOR SIMULATING CARDIO-PULMONARY RESUSCITATION TECHNIQUES**
VORRICHTUNG ZUR SIMULATION VON HERZ-LUNGEN-REANIMATIONSTECHNIKEN
DISPOSITIF SIMULATEUR DE TECHNIQUES DE RÉANIMATION CARDIO-PULMONAIRE

(30) Priority: 28.05.2009 ES 200930216; 14.10.2009 ES 200930843
(43) Date of publication of application: 04.04.2012
(73) Proprietor: Enfavi, S.L., 03440 IBI (Alicante) (ES)
(72) Inventor: VICEDO PEINADO, Raul, 03440 IBI (Alicante) (ES)
(74) Representative: Carpintero Lopez, Francisco
(86) International application number: PCT/ES2010/070277
(87) International publication number: WO 2010/136626

(56) References cited:
- ES-A1- 253 281
- ES-A1- 272 967
- ES-A1- 2 331 557
- ES-T3- 2 049 990
- US-A- 3 209 469
- US-A- 3 916 535
- US-A- 5 195 896
- US-A1- 2005 058 977
- US-A1- 2007 054 254
- US-A1- 2007 264 621
- US-A1- 2007 264 621
- US-B2- 6 780 017
- US-B2- 6 780 017

## Description

### Technical Field of the Invention

The present invention relates to a device for simulating cardiopulmonary resuscitation techniques applicable in healthcare and more specifically in any educational activity involving teaching and/or practicing said cardiopulmonary resuscitation techniques without patients, allowing learning and improving them comfortably without the risk that their learning with people entails, while at the same time achieving a realistic simulation of the response which would be given by a real patient.

### Background of the Invention

Cardiopulmonary resuscitation techniques require qualified personnel to practice a thoracic massage in combination with insufflations on a patient experiencing cardio-respiratory arrest. Said emergency situations occur both in hospital environments and in accidents, for example, road accidents, in which urgent intervention is required and healthcare or qualified personnel dominating said techniques is needed, given that a failed actuation in performing said resuscitation techniques may have fatal consequences.

Therefore special training both in theoretical and in practical aspects is required in performing said resuscitation techniques so that in view of critical situations in which performing resuscitation is necessary, the qualified personnel has practiced the necessary maneuvers enough to the point of being well-versed in the movements, performing them mechanically.

Currently, real size dummies are used to practice these techniques in which the movements and the mouth-to-mouth breathing techniques are simulated even though said dummies have many limitations and differences with the response given by a real patient since they do not allow simulating the thoracic movements or the breathing of a patient experiencing cardiopulmonary arrest.

US patent No. US-6780017-B2 discloses a device for simulating cardiopulmonary resuscitation techniques in the sense of the preamble of claim 1, disclosing an adult/child and infant manikin for cardiopulmonary resuscitation including a head simulation having a neck opening and a mouth opening, wherein a removable lung bag can easily be placed within the head simulation using a bag insertion tool without any dismantling of the head simulation.

### Description of the Invention

The present invention relates to a device for simulating cardiopulmonary resuscitation techniques which allows teaching and/or practicing said cardiopulmonary resuscitation techniques without patients, allowing learning and improving them comfortably without the risk and the determining factors that their learning with people entails.

The device for simulating cardiopulmonary resuscitation techniques proposed by the invention comprises a base designed to be coupled to a chest piece in the shape of a human thorax and is designed to be elastically deformed towards the base when pressure is placed thereon manually by a user. The term "elastically" is understood as once the pressure ceases the chest piece recovers its original position again.

The base and the chest piece have a coinciding plan projection, a hollow space existing between said base and said chest piece when they are coupled, preferably along their perimeter, simulating a human torso.

An upper end of the base is articulated to a head piece in the partial shape of a human face corresponding to the front area of a human head.

Thus, according to the invention, the device comprises a pressure adjustment piece by way of a rotating wheel which is located in a central area of the base, and more specifically at a height located approximately at the center of the distance between the areas corresponding to the lower part of the neck and the sternum, the plan projection of which further corresponds with the area where pressure is applied for cardiopulmonary resuscitation on the chest piece.

Said pressure adjustment piece is designed to occupy three positions. There is a first position in which at least one upper height stop limits the deformation of the chest piece when pressure is placed thereon. There is a second position in which at least one lower height stop limits the deformation of the chest piece when pressure is placed thereon, the limit deformation of the chest piece in the second position being greater than the limit deformation in the first position. Finally, there is a third position for advanced users in which the deformation of the chest piece is not limited by stops, i.e., the position is free.

Therefore, in view of the aforementioned, in the first and second position, once the stops are contacted, said stops prevent the continued movement of the chest piece when pressure is placed thereon, its deformation being limited to the point defined by the position of said stops.

Thus, when the pressure adjustment piece is in the first position, the device allows simulating cardiopulmonary resuscitation techniques in children, whereas when the pressure adjustment piece is in the second position, the device serves to simulate cardiopulmonary resuscitation techniques in adults.

In short, in the first position, according to a preferred embodiment, when the resuscitation is performed a noise is produced indicating that chest deformation or caving in has reached 3 cm, this being the deformation stop position of the chest piece defined by the upper height stop. On the other hand, the second position is for practicing in adults but for users who are beginners, such that according to a preferred embodiment when the resuscitation is performed a noise is produced indicating that 4.5 cm, which is the stop position defined by the lower height stop, has been reached.

The elements comprised in the device, including the rivets and attachment means, are preferably made of thermoplastic materials, whereby a high dimensional quality is achieved at low cost, in addition to obtaining an extremely lightweight device which allows it be transported easily.

The possibility that the head piece has two nasal orifices and a buccal orifice is contemplated such that the combined actuation on the chest piece, performing a cardiopulmonary massage with insufflations on the orifices allows simulating cardiopulmonary resuscitation techniques with the device, such that the articulation of the head piece with respect to the base allows simulating the neck movements of a patient. Thus, the device comprises a lung-shaped elastic bag, preferably made of plastic, which is housed in the space existing between the base and the chest piece, having a volume comprised between 400-600 ml according to a preferred embodiment of the invention.

The bag is in turn coupled to the orifices by means of a coupling device by way of a funnel which is located in the inner face of the head piece. Said coupling device comprises a valve channeling the entrance of air into the bag from the nasal orifices and the buccal orifice and allows expelling said air from the bag when the cardiopulmonary resuscitation is stopped through an exit path different from said nasal orifices and said buccal orifice, all for hygienic reasons to prevent infections in different uses of the device.

A more realistic simulation is thus achieved because the bag simulates the action of the lungs, so that they are inflated and a correct learning of the cardiac massage is practiced, said bag passing through the area corresponding to the neck, such that as the head piece is articulated with respect to the base, the user of the device is obliged to place the head in its correct position because if it is placed forwards, placing pressure on the neck, the bag is blocked and does not let the air to pass, therefore the user has to move the head backwards so that the air can pass and fill the bag, and perform the artificial or mouth-to-mouth breathing at that time.

It is contemplated that the head piece is designed to occupy a resting position in which it is kept substantially horizontal, i.e., in straight line, and the entrance of air into the bag through the orifices is prevented by a ball comprised in the valve, and an active position for the cardiopulmonary resuscitation in which the head piece is inclined backwards and the ball of the valve allows the entrance of air into the bag through said orifices.

The user of the device is thus obliged to place the head in its correct position because if it is placed forwards, the entrance of air into the bag is blocked and it does not let the air pass, therefore the user has to move the head backwards so that the air can pass and fill the bag, and perform the artificial or mouth-to-mouth breathing at that time.

Likewise it is contemplated that the device comprises actuation means which permanently act on the head piece, tending to move and keep said head piece in the resting position when the actuation from a user is not received, thus allowing the head piece to return to the initial position when the user releases it, therefore to perform cardiopulmonary resuscitation the user has to keep said head piece inclined manually, as is required at the time of performing this technique with a real patient.

Finally, it is contemplated that the head piece comprises a closing wall located as lower prolongation preventing the access to the inside of the head piece from the area of the neck corresponding to the area of the chest piece. The cavity of the neck is thus closed, preventing being able to introduce fingers and preventing cuts or accidents from occurring as a consequence of manipulating said area.

Likewise, it is contemplated that the device comprises a compression spring designed to oppose resistance when pressure is exerted on the chest piece when it is brought closer to the base, and contributes to recovering the position of said chest piece when said pressure is removed.

The arrangement of the compression spring allows the recovery of the chest to be complete and to be similar to reality. The spring is located at the plan height where pressure is applied for cardiopulmonary resuscitation, exerting a certain pressure, such that it provides the feeling of practicing cardiopulmonary recovery on a person. The compression spring allows preventing successive deformations of the chest piece, which can cause permanent deformation as a consequence of the successive loss of elasticity, if it is made of plastic, whereby prolonging the service life of the device, assuring a correct operation.

Finally it is contemplated that the device comprises a chest protector designed to be interchangeably coupled on the chest piece, and a mask designed to be interchangeably coupled on the head piece, both preferably being made of thermoplastic materials, whereby achieving greater protection of the chest piece and head piece.

The possibility that each upper height stop prolongs into an upper pivot and that each lower height stop prolongs in an upper position into a lower pivot is contemplated, said lower pivot and upper pivot being designed to be alternatively housed in at least one guide prolonging from the inner face of the chest piece. The guides arranged circumferentially in correspondence with the pivots thus allow partially and alternatively housing the pivots of the lower stops or the pivots of the upper stops until the movement of the chest piece is limited when the end of the guides contacts with the corresponding stop. A guided movement, being a gentler movement which better simulates the reaction of a real patient, is thereby achieved in the flexion or deformation of the chest piece when performing the cardiac massage.

Similarly to the guides and the pivots defining the different positions of the device, it is contemplated that a central guide housed in a central pivot of the pressure adjustment piece prolongs from the inner face of the chest piece, said central pivot being kept in the central guide in any position in which said pressure adjustment piece is located. The compression spring is in turn arranged in said central guide.

### Description of the Drawings

To complement the description that is being made and for the purpose of aiding to better understand the features of the invention according to a preferred practical embodiment thereof, a set of drawings is attached as an integral part of said description in which the following has been depicted with an illustrative and non-limiting character:
Figure 1 shows a top perspective view of the device for simulating cardiopulmonary resuscitation techniques proposed by the invention.

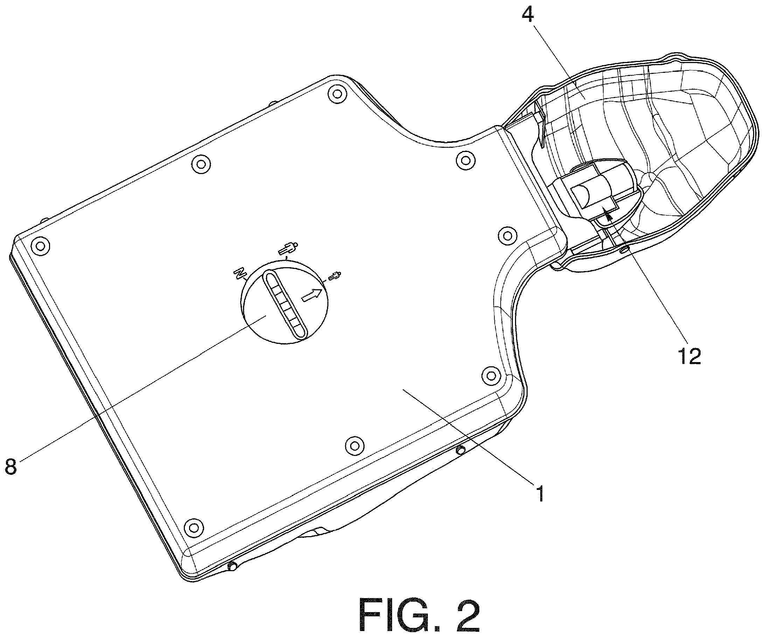

Figure 2 shows a bottom perspective view of the device in which both the pressure adjustment piece located in the base and the coupling device located in the inner face of the head piece can be seen.

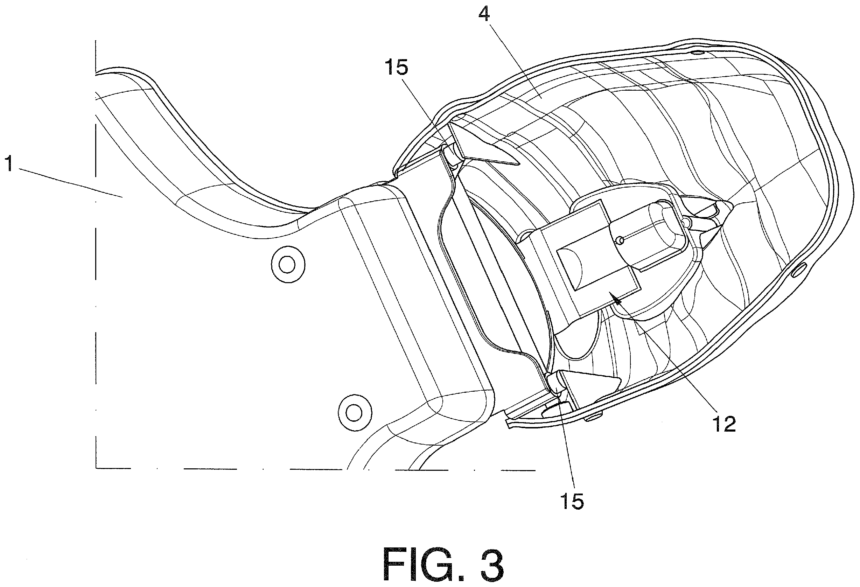

Figure 3 shows a detail view of Figure 2 in which the articulation pin between the head piece and the assembly formed by the base and the chest piece as well as the arrangement of the actuation means keeping the head piece in the resting position can be seen.
Figure 4 shows a longitudinal section of the head piece located in the resting position in which the ball of the valve located in a position preventing the passage of air into the bag can be seen.
Figure 5 shows a perspective view of a detail of a longitudinal section of the valve corresponding to the resting position depicted in Figure 4.
Figure 6 shows a longitudinal section of the head piece located in the active position, i.e., inclined backwards, in which the ball of the valve located in a position allowing the passage of air into the bag can be seen.
Figure 7 shows a perspective view of a detail of a longitudinal section of the valve corresponding to the active position depicted in Figure 6.
Figure 8 shows a detail according to a perspective view from a lower viewpoint of the actuation means and the actuation thereof by way of a spring on tabs which are located in the inner face of the head piece, keeping said head piece in the resting position in the depicted position.
Figure 9 shows a detail view such as that of Figure 8, where the head piece has been depicted in the active position.

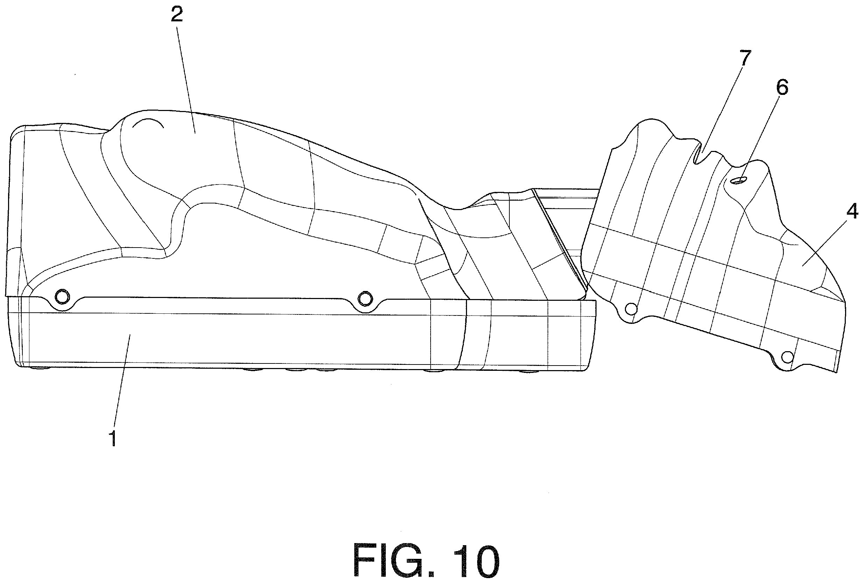

Figure 10 shows a profile view of the device of the invention, the head piece having being depicted in the active position, inclined backwards, for cardiopulmonary resuscitation.
Figure 11 shows a schematic view of the hollow space existing between the chest piece and the base, in which the pressure adjustment piece can be seen in the first position, the guides of the chest piece being in contact with the upper height stops.
Figure 12 shows an exploded perspective view of the elements depicted in Figure 11.
Figure 13 shows a perspective view of the valve and its passage piece in an intermediate assembly position.
Figure 14 shows an exploded perspective view of the elements comprised in the valve.
Figure 15 shows a perspective view of the valve with the passage piece in its assembly position, i.e., inserted into the valve.

### Preferred Embodiment of the Invention

In view of the described drawings, it can be seen how in one of the possible embodiments of the invention, the device for simulating cardiopulmonary resuscitation techniques proposed by the invention comprises a base (1) which is coupled to a chest piece (2) in the shape of a human thorax and is designed to be elastically deformed towards the base (1) when pressure is manually placed thereon by a user.

The base (1) and the chest piece (2) have a coinciding plan projection, a hollow space existing between said base (1) and said chest piece (2) when they are coupled, simulating a human torso.

An upper end of the base (1) is articulated to a head piece (4) in the partial shape of a human face.

The device comprises a pressure adjustment piece (8) located in a central area of the base (1) the plan projection of which corresponds with the area where pressure is applied for cardiopulmonary resuscitation, where said pressure adjustment piece (8) is designed to occupy a first position, in which two upper height stops (10) limit the deformation of the chest piece (2) when pressure is placed thereon, a second position, in which two lower height stops (9) limit the deformation of the chest piece (2) when pressure is placed thereon, the limit deformation of the chest piece (2) in said second position being greater than the limit deformation in the first position, and a third position, in which the deformation of the chest piece (2) is not limited by stops.

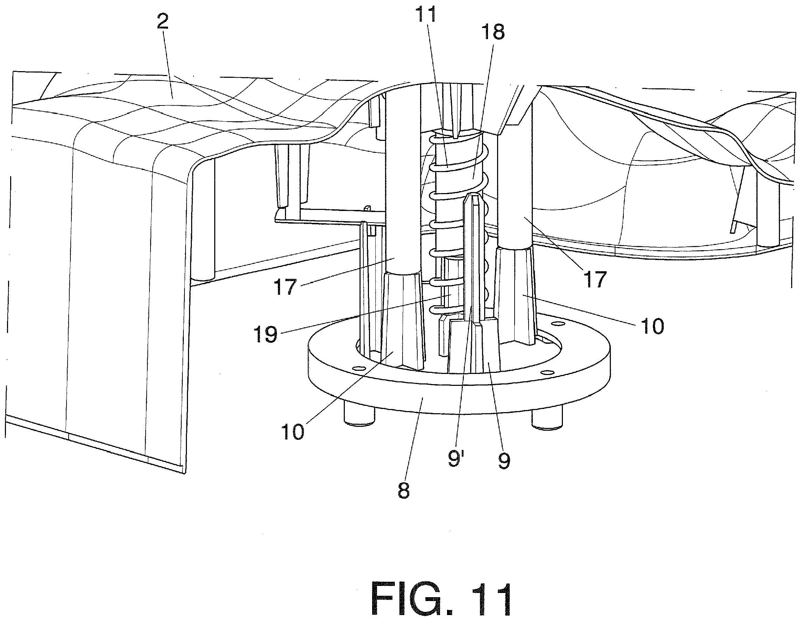

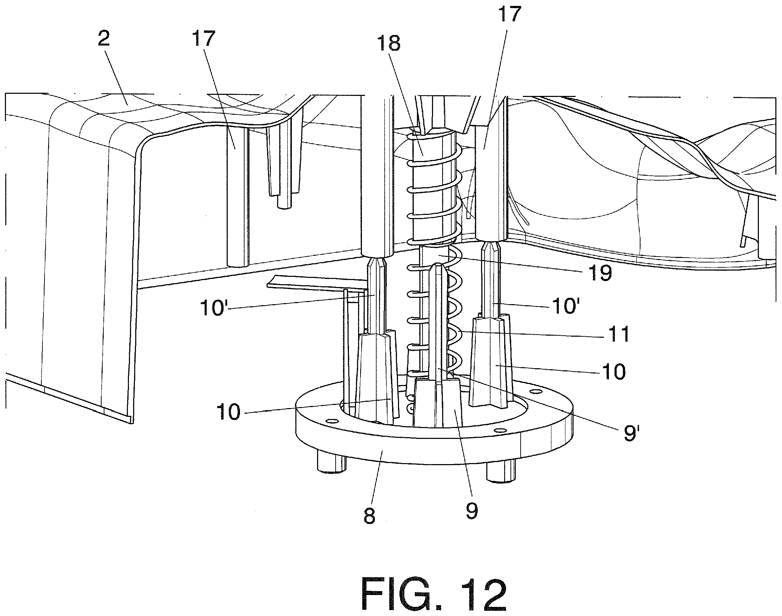

As can be seen in Figures 11 and 12 each upper height stop (10) prolongs into an upper pivot (10') and each lower height stop (9) prolongs into a lower pivot (9'), said lower pivot (9') and upper pivot (10') being designed to be alternatively housed in two guides (17) prolonging from the inner face of the chest piece (2).

The arrangement of the central guide (18) and the housing of the central pivot (19) around which there is arranged the compression spring (11) can also be seen in said Figures 11 and 12.

The head piece (4) has two nasal orifices (6) and a buccal orifice (7), the device comprising a lung-shaped bag housed in the space existing between the base (1) and the chest piece (2) which is coupled to said orifices (6, 7) by means of a coupling device (12) located in the inner face of the head piece (4).

Said coupling device (12) comprises a valve (13) channeling the entrance of air into the bag from the nasal orifices (6) and the buccal orifice (7) and allows expelling said air from the bag through an exit path different from said nasal orifices (6) and said buccal orifice (7).

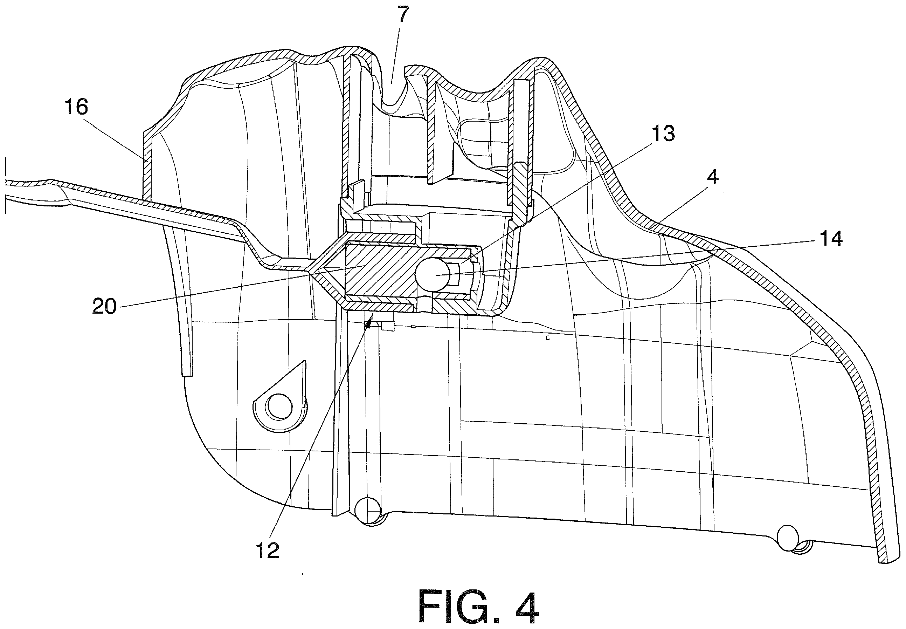

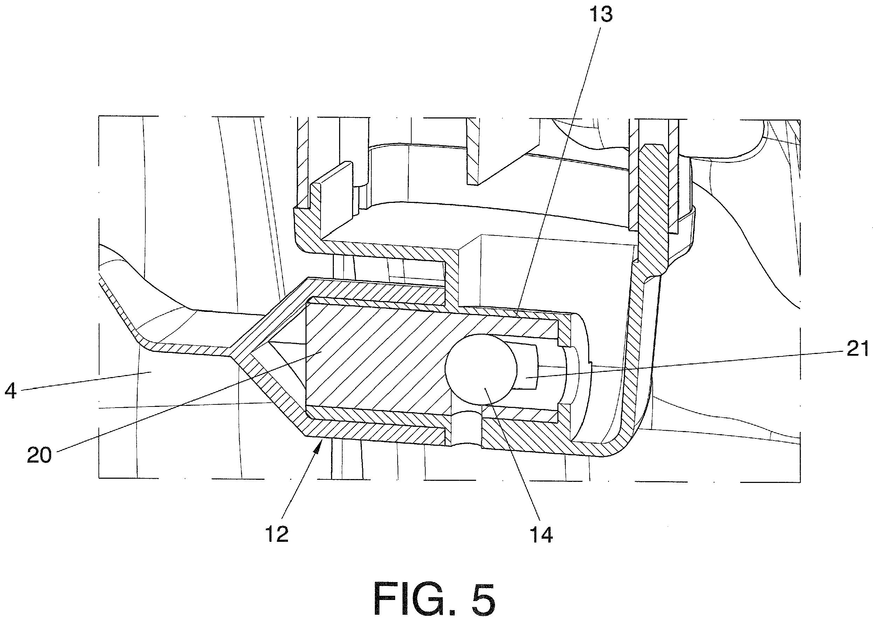

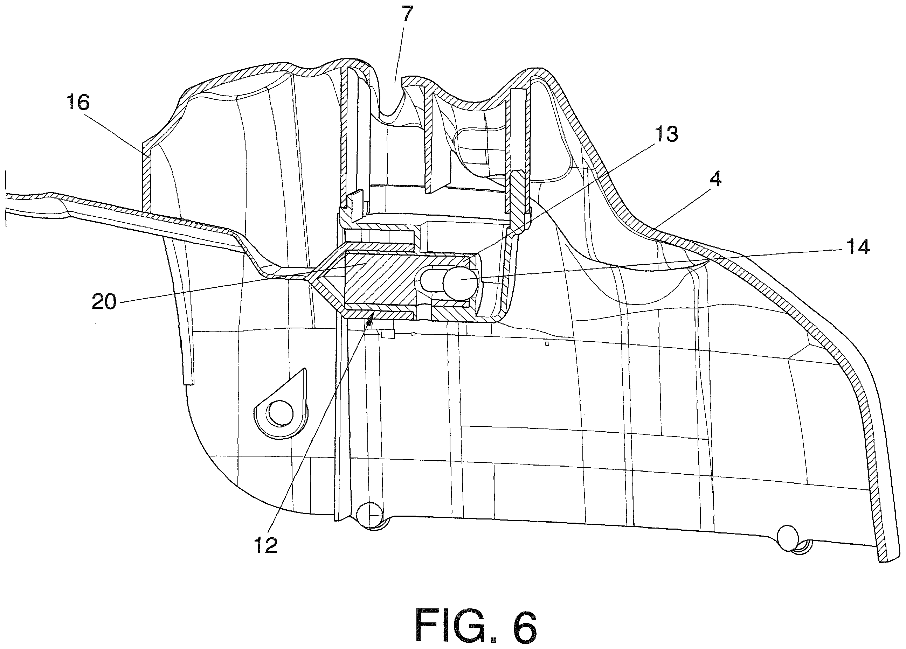

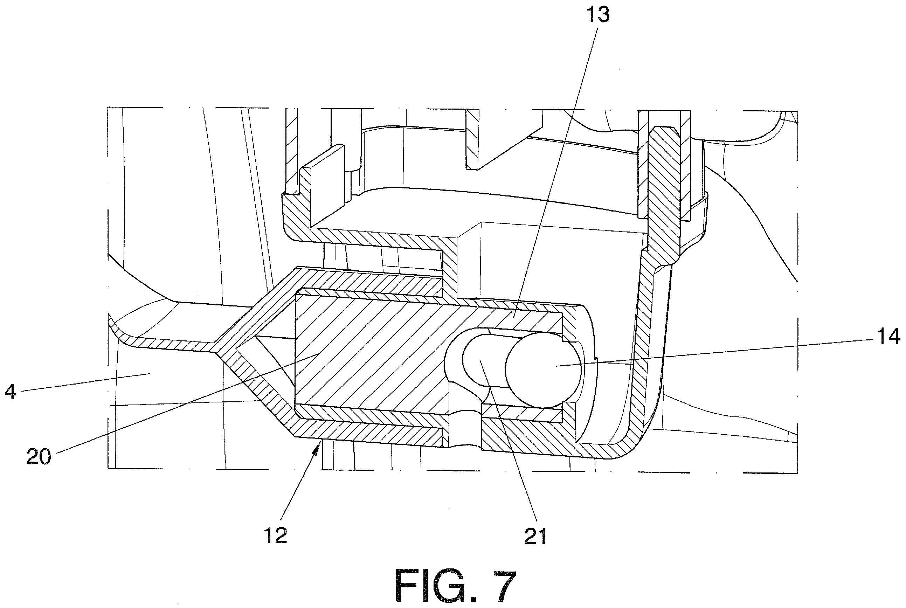

As can be seen in Figures 4 to 7, the head piece (4) is designed to occupy a resting position, Figures 4 and 5, in which it is kept substantially horizontal and the entrance of air into the bag through the orifices (6, 7) is prevented by a ball (14) comprised in the valve (13), and an active position, Figures 6 and 7, in which it is inclined backwards and the ball (14) of the valve (13) allows the entrance of air into the bag through said orifices (6, 7).

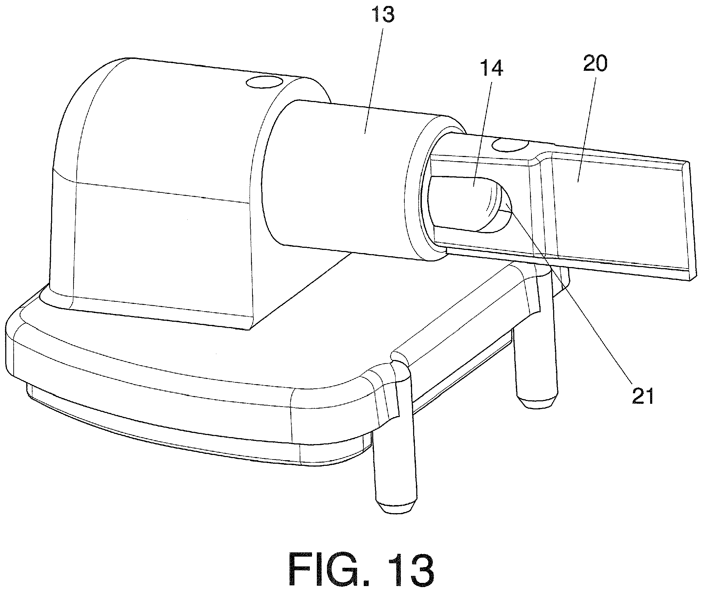

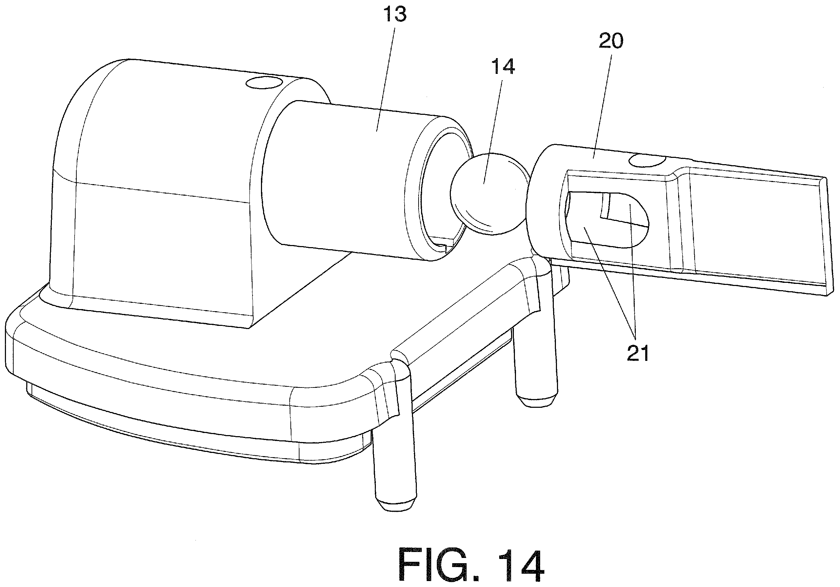

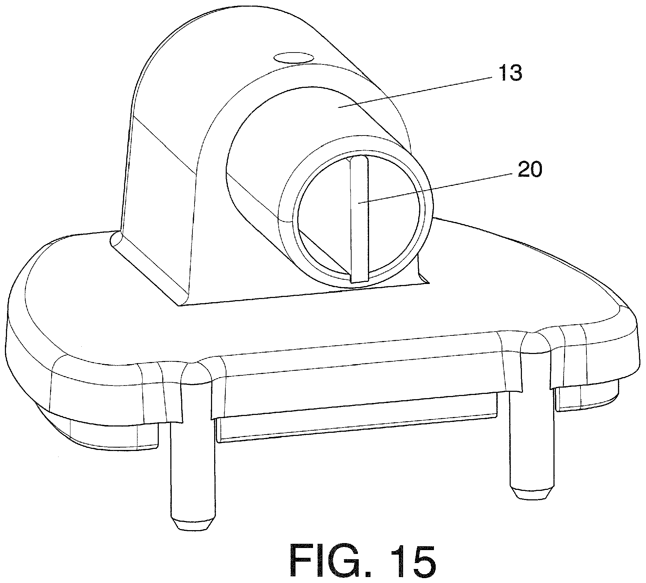

As can be seen in Figures 13 to 15, as well as in Figures 5 and 7, the valve (13) comprises a passage piece (20) which is inserted into said valve (13) for channeling the passage of air between the bag and the orifices (6, 7).

Said passage piece (20) contains the ball (14) and has respective side grooves (21) allowing the passage of air through the valve (13) depending on the position of said ball (14) in accordance with a narrowing of said passage piece (20) towards the area of connection with the bag.

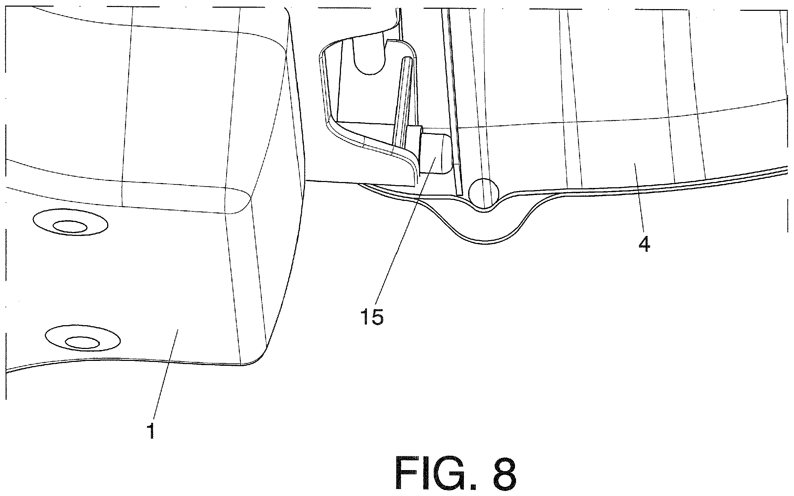

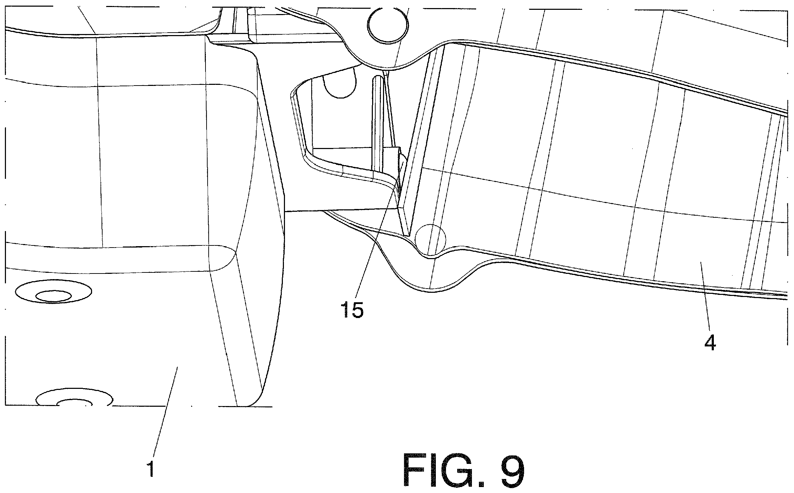

It can be seen in Figures 8 and 9 how the device comprises actuation means (15) by way of springs which permanently act on the head piece (4), specifically on flanges located in the inner face of the head piece (4), tending to move and keep said head piece (4) in the resting position when the actuation from a user is not received.

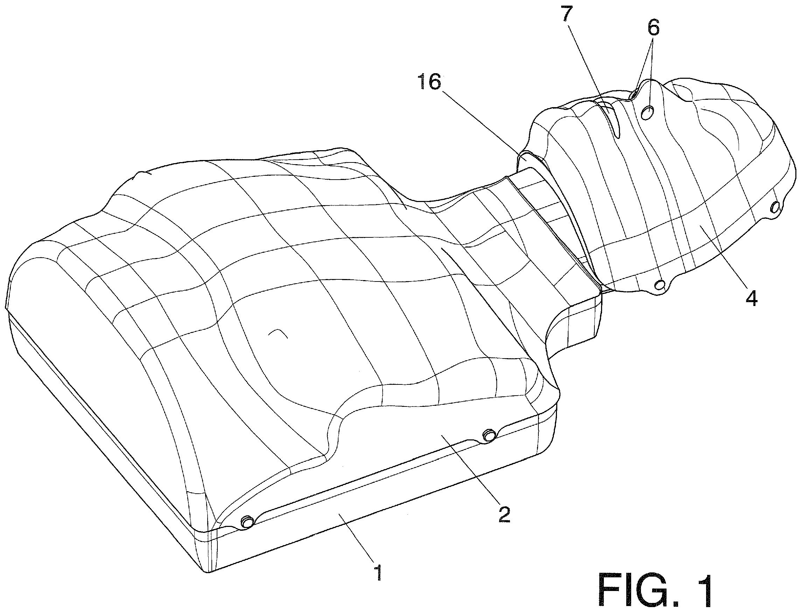

The closing wall (16) comprising the head piece (4) and its location as a lower prolongation preventing access to the inside of the head piece (4) from the area of the neck corresponding to the area of the chest piece (2) can be seen in Figure 1.

## Claims

1. Device for simulating cardiopulmonary resuscitation techniques comprising a base (1) which is coupled to a chest piece (2) in the shape of a human thorax and is designed to be elastically deformed towards the base (1) when pressure is placed thereon by a user, a hollow space existing between said base (1) and said chest piece (2), wherein an upper end of the base (1) is articulated to a head piece (4) in the partial shape of a human face, wherein the device comprises a pressure adjustment piece (8) located in a central area of the base (1) the plan projection of which corresponds with the area where pressure is applied for cardiopulmonary resuscitation, wherein said pressure adjustment piece (8) is designed to occupy a first position, in which at least an upper height stop (10) limits the deformation of the chest piece (2) when pressure is placed thereon, a second position, in which at least one lower height stop (9) limits the deformation of the chest piece (2) when pressure is placed thereon, the limit deformation of the chest piece (2) in said second position being greater than the limit deformation in the first position, and a third position, in which the deformation of the chest piece (2) is not limited by stops, **characterized in that** each upper height stop (10) prolongs into an upper pivot (10') and each lower height stop (9) prolongs into a lower pivot (9'), said lower pivot (9') and upper pivot (10') being designed to be alternatively housed in at least one guide (17) prolonging from the inner face of the chest piece (2).

2. Device for simulating cardiopulmonary resuscitation techniques according to claim 1, **characterized in that** the head piece (4) has two nasal orifices (6) and a buccal orifice (7), the device comprising a lung-shaped bag housed in the space existing between the base (1) and the chest piece (2), which is coupled to said orifices (6, 7) by means of a coupling device (12) located in the inner face of the head piece (4), comprising a valve (13) channeling the entrance of air into the bag from the nasal orifices (6) and the buccal orifice (7) and allowing expelling said air from the bag through an exit path different from said nasal orifices (6) and said buccal orifice (7).

3. Device for simulating cardiopulmonary resuscitation techniques according to claim 2, **characterized in that** the head piece (4) is designed to occupy a resting position in which it is kept substantially horizontal and the entrance of air into the bag through the orifices (6, 7) is prevented by a ball (14) comprised in the valve (13), and an active position in which it is inclined backwards and the ball (14) of the valve (13) allows the entrance of air into the bag through said orifices (6, 7).

4. Device for simulating cardiopulmonary resuscitation techniques according to claim 3, **characterized in that** the valve (13) comprises a passage piece (20) channeling the air between the bag and the orifices (6, 7), wherein said passage piece (20) contains the ball (14) and has respective side grooves (21) allowing the passage of air through the valve (13) depending on the position of said ball (14).

5. Device for simulating cardiopulmonary resuscitation techniques according to any of claims 3 and 4, **characterized in that** it comprises actuation means (15) which permanently act on the head piece (4), tending to move and keep said head piece (4) in the resting position when the actuation from a user is not received.

6. Device for simulating cardiopulmonary resuscitation techniques according to any of the preceding claims, **characterized in that** the head piece (4) comprises a closing wall (16) located as a lower prolongation preventing the access to the inside of the head piece (4) from the area of the neck corresponding to the area of the chest piece (2).

## Patentansprüche

1. Vorrichtung zur Simulation von Herz-Lungen-Reanimationstechniken, umfassend eine Basis (1), die mit einem Brustteil (2) in der Form eines menschlichen Thorax verbunden ist, und so gestaltet ist, dass sie elastisch in Richtung der Basis (1) verformt wird, wenn Druck durch einen Benutzer darauf angewendet wird, ein Hohlraum, der zwischen der Basis (1) und dem Brustteil (2) existiert, wobei ein oberes Ende der Basis (1) zu einem Kopfteil (4) mit einer partiellen Form eines menschlichen Gesichtes hin mit einem Gelenk versehen ist, wobei die Vorrichtung ein Druckanpassungsteil (8) umfasst, das in einem zentralen Bereich der Basis (1) angeordnet ist, wobei die Planprojektion davon dem Bereich entspricht, in dem Druck für eine Herz-Lungen-Reanimation angewendet wird, wobei das Druckanpassungsteil (8) derart gebildet ist, dass es eine erste Position einnimmt, in der mindestens eine obere Höhenbegrenzung (10) die Verformung des Brustteils (2) begrenzt, wenn Druck darauf angewendet wird, eine zweite Position, in der mindestens eine untere Höhenbegrenzung (9) die Verformung des Brustteils (2) begrenzt, wenn Druck darauf angewendet wird, wobei die Beschränkung der Verformung des Brustteils (2) in der zweiten Position größer ist als die in der ersten Position, und eine dritte Position, in welcher die Verformung des Brustteils (2) nicht durch Begrenzungen begrenzt ist, **dadurch gekennzeichnet, dass** sich jede obere Höhenbegrenzung (10) in einen oberen Zapfen (10') verlängert, und sich jede untere Höhenbegrenzung (9')in einen unteren Zapfen (9') verlängert, wobei der untere Zapfen (9') und der obere Zapfen (10') so gestaltet sind, dass sie alternativ in wenigstens einer Führung (17), die sich von der inneren Oberfläche des Brustteils (2) verlängert, aufgenommen sind.

2. Vorrichtung zur Simulierung von Herz-Lungen-Reanimationstechniken nach Anspruch 1, **dadurch gekennzeichnet, dass** das Kopfteil (4) zwei Nasenöffnungen (6) und eine Mundöffnung (7) umfasst, wobei die Vorrichtung einen lungenförmigen Sack umfasst, der in dem Raum, der zwischen der Basis (1) und dem Brustteil (2) existiert, aufgenommen ist, der mit den Öffnungen (6, 7) mittels einer Verbindungsvorrichtung (12) verbunden ist, die in der inneren Oberseite des Kopfteils (4) angeordnet ist, umfassend ein Ventil (13), das den Lufteintritt in den Sack von den Nasenöffnungen (6) und der Mundöffnung (7) leitet und das Austreten der Luft von dem Sack durch einen Ausgangsweg, der sich von den Nasenöffnungen (6) und der Mundöffnung (7) unterscheidet, erlaubt.

3. Vorrichtung zur Simulierung von Herz-Lungen-Reanimationstechniken nach Anspruch 2, **dadurch gekennzeichnet, dass** das Kopfteil (4) zur Einnahme einer Ruheposition entwickelt ist, in welcher es im Wesentlichen horizontal gehalten wird und der Lufteintritt in den Sack durch die Öffnungen (6, 7) durch einen Ball (14) verhindert wird, der in dem Ventil (13) umfasst ist, und einer aktiven Position, in welcher er nach hinten geneigt ist und der Ball (14) des Ventils (13) den Eintritt von Luft in den Sack durch die Öffnungen (6, 7) erlaubt.

4. Vorrichtung zur Simulierung von Herz-Lungen-Reanimationstechniken nach Anspruch 3, **dadurch gekennzeichnet, dass** das Ventil (13) ein Durchgangsteil (20) umfasst, das die Luft zwischen dem Sack und den Öffnungen (6, 7) leitet, wobei das Durchgangsteil (20) den Ball (14) enthält und jeweilige Seitenvertiefungen (21) aufweist, welche den Durchlass von Luft durch das Ventil (13) je nach der Position des Balls (14) erlaubt.

5. Vorrichtung zur Simulierung von Herz-Lungen-Reanimationstechniken nach einem der Ansprüche 3 und 4, **dadurch gekennzeichnet, dass** sie Betätigungsmittel (15) umfasst, die permanent auf das Kopfteil (4) einwirken, die dazu tendieren, das Kopfteil (4) zu bewegen und in der Ruheposition zu halten, wenn die Betätigung durch einen Benutzer nicht empfangen wird.

6. Vorrichtung zur Simulierung von Herz-Lungen-Reanimationstechniken nach einem der vorstehenden Ansprüche, **dadurch gekennzeichnet, dass** das Kopfteil (4) eine Schließwand (16) umfasst, die als eine untere Verlängerung angeordnet ist, die den Zugang zur Innenseite des Kopfteils (4) von dem Nackenbereich, der dem Brustbereich (2) entspricht, zu verhindern.

## Revendications

1. Dispositif de simulation de techniques de réanimation cardio-pulmonaire, comprenant un socle (1), qui est adjoint à une pièce (2) de thorax, à la forme d'un thorax humain, conçue pour être déformée élastiquement en direction du socle (1) quand une pression y est appliquée par un utilisateur, un espace vide existant entre le socle (1) et la pièce (2) de thorax, une extrémité supérieure du socle (1) étant articulée à une pièce (4) de tête à la forme partielle d'une face humaine, le dispositif comprenant une pièce (8) de réglage de la pression placée dans une région centrale du socle (1), dont la projection en plan correspond à la région où de la pression est appliquée pour une réanimation cardio-pulmonaire, la pièce (8) de réglage de la pression étant conçue pour occuper une première position, dans laquelle au moins une butée (10) en hauteur supérieure limite la déformation de la pièce (2) de thorax, lorsqu'une pression y est appliquée, une deuxième position, dans laquelle au moins une butée (9) en hauteur inférieure limite la déformation de la pièce (2) de thorax, lorsqu'une pression y est appliquée, la déformation limite de la pièce (2) de thorax dans la deuxième position étant plus grande que la déformation limite dans la première position, et une troisième position dans laquelle la déformation de la pièce (2) de thorax n'est pas limitée par des butées, **caractérisé en ce que** chaque butée (10) en hauteur supérieure se prolonge en un pivot (10') supérieur et chaque butée (9) en hauteur inférieure se prolonge en un pivot (9') inférieur, le pivot (9') inférieur et le pivot (10') supérieur étant conçus pour être logés en alternance dans au moins un guide (17) en prolongement de la face intérieure de la pièce (2) de thorax.

2. Dispositif de simulation de techniques de réanimation cardio-pulmonaire suivant la revendication 1, **caractérisé en ce que** la pièce (4) de tête a deux orifices (6) nasaux et un orifice (7) buccal, le dispositif comprenant un coussin en forme de poumon logé dans l'espace existant entre le socle (1) et la pièce (2) de thorax, qui est couplé aux orifices (6, 7) au moyen d'un dispositif (12) de couplage placé dans la face intérieure de la pièce (4) de tête, comprenant une soupape (13) canalisant l'entrée d'air dans le coussin à partir des orifices (6) nasaux et de l'orifice (7) buccal et permettant d'expulser l'air du coussin par un trajet de sortie différent des orifices (6) nasaux et de l'orifice (7) buccal.

3. Dispositif de simulation de techniques de réanimation cardio-pulmonaire suivant la revendication 2, **caractérisé en ce que** la pièce (4) de tête est conçue pour occuper une position de repos, dans laquelle elle est maintenue sensiblement horizontale et dans laquelle l'entrée d'air dans le coussin par les orifices (6, 7) est empêchée par une bille (14) comprise dans la soupape (13), et une position active, dans laquelle elle est inclinée vers l'arrière et la bille (14) de la soupape (13) permet l'entrée d'air dans le coussin par les orifices (6, 7).

4. Dispositif de simulation de techniques de réanimation cardio-pulmonaire suivant la revendication 3, **caractérisé en ce que** la soupape (13) comprend une pièce (20) de passage conduisant l'air entre le coussin et les orifices (6, 7), la pièce (10) de passage comprenant la bille (14) et ayant des rainures (21) latérales respectives permettant le passage d'air dans la soupape (13) en fonction de la position de la bille (14).

5. Dispositif de simulation de techniques de réanimation cardio-pulmonaire suivant l'une quelconque des revendications 3 et 4, **caractérisé en ce qu'**il comprend des moyens (15) d'actionnement, qui agissent en permanence sur la pièce (4) de tête, en tendant à la déplacer et à maintenir la pièce (4) de tête dans la position de repos, lorsque l'actionnement par un utilisateur n'est pas reçu.

6. Dispositif de simulation de techniques de réanimation cardio-pulmonaire suivant l'une quelconque des revendications précédentes, **caractérisé en ce que** la pièce (4) de tête comprend une paroi (16) de fermeture placée en prolongement inférieur, empêchant l'accès à l'intérieur de la pièce (4) de tête à partir de la région du cou correspondant à la région de la pièce (2) de thorax.
